# EUROPÄISCHE PATENTSCHRIFT

(11) **EP 1 772 319 B1**
(45) Veröffentlichungstag und Bekanntmachung des Hinweises auf die Patenterteilung: **30.12.2009**
(21) Anmeldenummer: 06405419.0
(22) Anmeldetag: 03.10.2006
(51) Int. Cl.: B60R 13/10

(54) **Geräuscharme Halterung für ein Kraftfahrzeugkennzeichen**
Quiet vehicle license plate support.
Support silencieux pour plaque d'immatriculation

(30) Priorität: 10.10.2005 CH 16312005
(43) Veröffentlichungstag der Anmeldung: 11.04.2007
(73) Patentinhaber: KMT Kunststoff- und Metallteile AG, 8340 Hinwil (CH)
(72) Erfinder: Dousse, André, 8630 Rüti (CH); Scherrer, Fridolin, 8340 Hinwil (CH)
(74) Vertreter: Liebetanz, Michael

(56) Entgegenhaltungen:
- WO-A-2006/075897
- DE-U1- 29 817 692
- GB-A- 768 815
- GB-A- 776 696
- GB-A- 2 222 017

## Beschreibung

### Technisches Gebiet der Erfindung

Die vorliegende Erfindung betrifft das Gebiet der Halterungen für ein Kraftfahrzeugkennzeichen und weist die Merkmale des Oberbegriffs des Anspruchs 1 auf.

### Stand der Technik

Aus dem Stand der Technik ist eine grosse Anzahl von Kennzeichenbefestigungen für Kraftfahrzeuge bekannt.

CH 688 035 offenbart einen Halter für eine Kraftfahrzeug-Nummerntafel. Dabei wird die Autonummer mittels einer metallischen Feder gegen einen Rand gedrückt. Dadurch werden Klappergeräusche, die aufgrund der Verbindung von Autonummer und Halterung entstehen verhindert. Es ist jedoch ein Nachteil, dass aufgrund der Montage an ein Kraftfahrzeug weiterhin Klappergeräusche entstehen können. Zudem müssen die Feder und der Halter in einem separatem Arbeitsschritt montiert werden, was zusätzlich Kosten verursacht.

Ferner zeigt die GB 776,696 eine Vorrichtung zum Schutz des Nummernschildes eines Motorfahrzeuges.

### Darstellung der Erfindung

Ausgehend von diesem Stand der Technik liegt der Erfindung die Aufgabe zugrunde, eine Kennzeichenbefestigung so auszugestalten, dass möglichst keine Klappergeräusche auftreten, welche durch Vibrationen ausgelöst werden, die beispielsweise während der Fahrt oder während dem Schliessen der Heckklappe entstehen.

Diese Aufgabe wird dadurch gelöst, dass die Grundplatte mit mindestens einem Dämpfungselement versehen ist, welches auf der der besagten Kennzeichenaufnahme gegenüberliegenden Seite über die Oberfläche der Grundplatte hinausragt und damit die Halterung gegenüber unerwünschten von dem besagten Kraftfahrzeug übertragenen Vibrationen dämpft.

Es ist ein weiteres Ziel dieser Erfindung, dass diese Kennzeichenbefestigung mit einem kostengünstigen Verfahren hergestellt werden kann.

Diese Aufgabe wird mit den Merkmalen des Anspruchs 12 gelöst.

Weitere vorteilhafte Ausführungsformen sind in den Unteransprüchen gekennzeichnet.

### Kurze Beschreibung der Zeichnung

Die Erfindung wird im folgenden anhand der Zeichnung näher beschrieben. Es zeigt:
- Fig. 1: eine Ansicht einer Kennzeichenbefestigung gemäss einem ersten Ausführungsbeispiel der vorliegenden Erfindung;
- Fig. 2: einen Schnitt E-E des Ausführungsbeispiels der Figur 1;
- Fig. 3a: eine Detailansicht der Figur 2;
- Fig. 3b: eine Detailansicht der Figur 2;

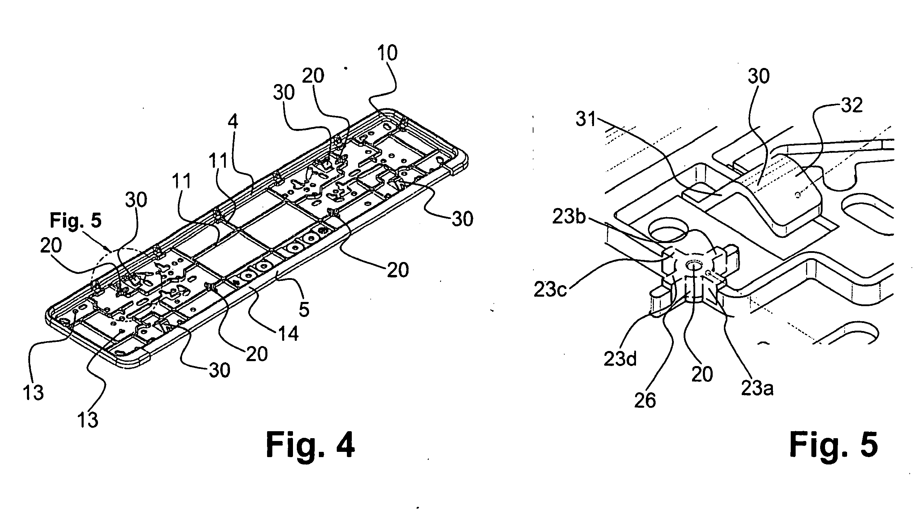

- Fig. 4: eine perspektivische Ansicht des Ausführungsbeispiels der Figur 1;
- Fig. 5: eine Detailansicht der Figur 4 von oben; und
- Fig. 6: eine Ansicht einer Kennzeichenbefestigung gemäss einem zweiten Ausführungsbeispiel der vorliegenden Erfindung;
- Fig. 7: einen Schnitt des Ausführungsbeispiels der Figur 6
- Fig. 8: eine perspektivische Ansicht des Ausführungsbeispiels der Figur 6; und
- Fig. 9: eine Detailansicht der Figur 8.

### Beschreibung bevorzugter Ausführungsbeispiele

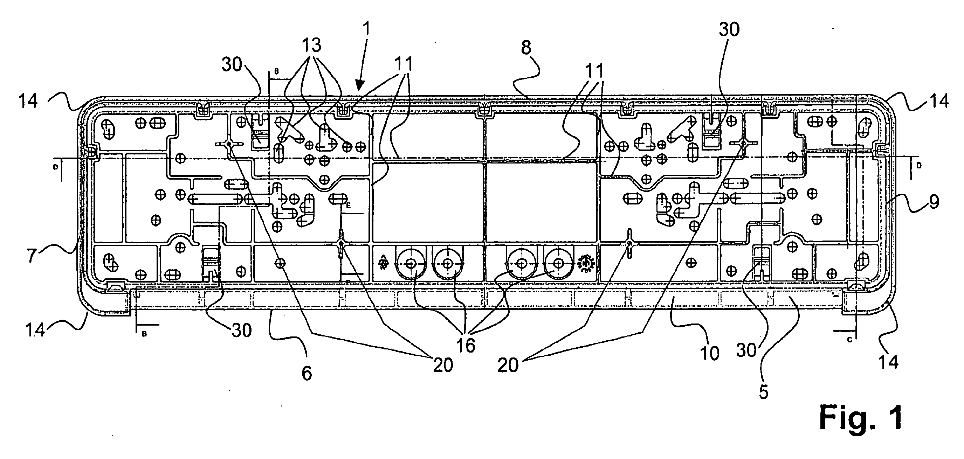

Figur 1 zeigt eine Ansicht einer Kennzeichenbefestigung 1 gemäss einem ersten Ausführungsbeispiel der vorliegenden Erfindung. Die Kennzeichenbefestigung 1 umfasst im wesentlichen eine Halterung 10, Dämpfungselemente 20 und Federelemente 30, die eine Aufnahme 40 für ein Kennzeichen bilden.

Die Halterung 10 weist im wesentlichen eine rechteckige Grundform mit abgerundeten Ecken 14 auf. Die rechteckige Grundform beinhaltet zwei längere Kanten 8 und 10 und zwei kürzere Kanten 7 und 9.

Die viereckige Grundform ist an den drei Seiten 7, 8, 9 von einem überstehenden Rand 4 umgeben, so dass sich eine Randnut 40 ergibt, die hier auch als Aufnahme für ein Kennzeichen bezeichnet wird. Das Kennzeichen (nicht gezeigt) kann von der vierten Seite 10 her in die Kennzeichenbefestigung 1 eingeschoben werden. In der vollständig eingeschobenen Position liegt das Kennzeichen in den die Aufnahme 40 bildenden Randnuten an den Seiten 7, 8 und 9 und dabei auf einer Auflageebene 15, auf Dämpfungselementen 20 und Federelementen 30 auf. Über einen Schieber (nicht gezeigt), welcher in eine Aufnahme 14 für den Schieber eingeschoben werden kann, wird das Kennzeichen in seiner Position gehalten, indem die offene Seite 6 von unten mindestens in Höhe der Randnuten 40 versperrt wird.

Im weiteren weist die Halterung 10 in ihrer Grundplatte eine Vielzahl von Verstärkungsrippen 11 und ebenfalls eine Vielzahl von Öffnungen 13 auf. Die Verstärkungsrippen 11 dienen zur Erhöhung der Steifigkeit der Halterung 10. Mittels Schrauben oder anderen Befestigungselementen, welche durch die Öffnungen 13 hindurchgeführt werden, kann die Halterung 10 an einem Kraftfahrzeug befestigt werden.

In einem bevorzugten Ausführungsbeispiel gemäss der vorliegenden Erfindung sind vier Dämpfungselemente 20 und vier Federelemente 30 angeordnet. Dabei sind die Dämpfungselemente 20 an Punkten angeordnet, die die Ecken eines Trapezes aufspannen. Die näher am oberen Rand 8 liegenden Dämpfungselemente 20 sind weiter voneinander entfernt angeordnet, als die näher am unteren Rand 6 angeordneten Elemente 20. Sie liegen hier jeweils auf einer Linie parallel zur langen Seitenkante 6 bzw. 8. Auch die Federelemente 30 sind in regelmässiger Weise angeordnet. Dabei sind die Federelemente 30 an Punkten angeordnet, die die Ecken eines Trapezes aufspannen. Die näher am oberen Rand 8 liegenden Federelemente 30 sind näher aneinander angeordnet, als die weiter am unteren Rand 6 angeordneten Elemente 30. Sie liegen jeweils auf einer Linie parallel zur langen Seitenkante 6 bzw. 8. Die Elemente liegen hier jeweils im Abstand von den kurzen Seiten 7 bzw. 9 in einem Bereich zwischen 1/6 und 1/3 von diesem Rand.

Wenn mehr als ein Federelement 30 oder Dämpfungselement 20 vorgesehen ist, die jeweils paarweise im Bereich zwischen 1/6 und 1/3 von den seitlichen kürzeren Rändern 7, 9 beabstandet sind, dann kann davon, bei einer ungeraden Anzahl von Federelementen 30 oder Dämpfungselementen 20 eine ungerade Anzahl von diesen auf der Mittelebene zwischen den seitlichen kürzeren Rändern 7, 9 angeordnet sein.

Je nach Abmessung des Kennzeichens, können die Elemente 20 oder 30 auch anders angeordnet sein, insbesondere können weitere Dämpfungselemente 20 und/oder (unabhängig davon) Federelemente 30 angeordnet werden. Bei sehr kleinen Kennzeichen (beispielsweise Kennzeichen eines Motorrades oder Motorrollers) ist es ausreichend, wenn mindestens ein Dämpfungselement 20 vorgesehen ist. Vorzugsweise kann auch ein zusätzliches Federelement 30 vorgesehen sein.

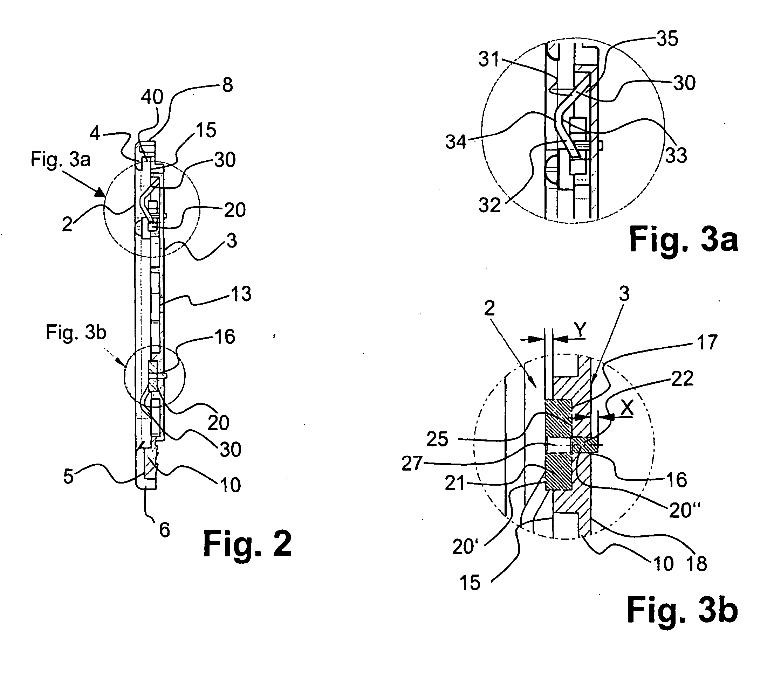

Figur 2 zeigt einen Querschnitt entlang der Linie E-E in Figur 1. In Figur 2 ist ersichtlich, dass das Dämpfungselement 20 und das Federelement 30 über die Auflageebene 15 des Kennzeichens hervorstehen. Ebenfalls zeigt Figur 2 den oberen Randbereich 4 mit der Aufnahme 40 für das Kennzeichen. Die seitlichen Randnuten können gleich ausgestaltet sein.

Figur 3a zeigt im wesentlichen einen vergrösserten Ausschnitt aus der Fig. 2 um einen Bereich eines Federelementes 30. Das Federelement 30 umfasst einen ersten Schenkel 31 und einen zweiten Schenkel 32. Der erste Schenkel 31 ist dabei an der Halterung 10 angeformt. Dabei steht der erste Schenkel 31 in einem Winkel 35 zur Auflageebene 15. Vorzugsweise liegt der Winkel 35 zwischen 30° und 60°. Am freistehenden Ende des ersten Schenkels 31 ist ein zweiter Schenkel 32 angeformt. Der erste Schenkel 31 und der zweite Schenkel 32 stehen in einem Winkel 33 zueinander. Vorzugsweise liegt der Winkel 33 zwischen 120° und 150°. Am Schnittpunkt des ersten Schenkels 31 und des zweiten Schenkels 32 entsteht eine Kuppe 34, auf welcher das Kennzeichen im montierten Zustand aufliegt. Die Kuppe 34 ist gegen das Kennzeichen hin abgeflacht ausgestaltet. Das Federelement 30 kann in einer weiteren Ausführungsform auch nur mit einem ersten Schenkel 31 ausgestaltet sein. Ferner ist es möglich, dass auch der zweite Schenkel an der Halterung 10 angeformt ist. Schliesslich kann es sich bei dem Federelement 30 auch um ein getrenntes Teil handeln, welches in entsprechend gegenüberliegenden Aufnahmen eingesetzt werden kann. Dann kann es sich um einen zur Halterung ähnlichen Kunststoff handeln oder beispielsweise auch um Blattfedern aus Metall.

Figur 3b zeigt im wesentlichen einen vergrösserten Ausschnitt aus der Fig. 2 um einen Bereich eines Dämpfungselementes 20. Das Dämpfungselement 20 umfasst einen ersten Abschnitt 20' und einen zweiten Abschnitt 20''. Der erste Abschnitt 20' beinhaltet einen zylindrischen Grundkörper 21 und vier Schenkel 23a-d. Dabei sind die vier Schenkel 23a-d an der Mantelfläche des zylindrischen Grundkörpers 21 angeformt und stehen in einem Winkel von 90° zueinander. Auf der Grundfläche 25 des Grundkörpers ist der Körper 22 angeformt, welcher den zweiten Abschnitt 20" bildet. Der Körper 22 hat einen kleineren Durchmesser als der zylindrische Grundkörper 21. Der Körper 22 kann sowohl zylindrisch als auch konisch ausgestaltet sein.

Die Ausnehmung in der Mitte des Dämpfungselementes 20 entsteht bei dessen Herstellung. Sie kann aber auch gefüllt sein. Die Öffnungen 27 entstehen durch das unten beschriebene Herstellverfahren.

Das Dämpfungselement 20 wird mittels dem unten beschriebenem Herstellverfahren mit der Halterung 10 verbunden. Die Grundfläche 25 des ersten Abschnitts 20' liegt auf der Dämpfungselementauflageebene 17 der Halterung 10 auf. Durch die Dimensionierung des ersten Abschnitts 20' stehen der zylindrische Grundkörper 21 und die Schenkel 23a-d gegenüber der Auflageebene 15 des Kennzeichens um das Mass Y hervor. Bevorzugterweise ist das Mass Y zwischen 0.5 mm und 3 mm, besonders bevorzugt zwischen 2 mm und 3 mm. Dieses Mass Y ist erheblich kleiner als der Abstand der Kuppe 34 des Federelementes 30 von der Auflagefläche 15. Bevorzugterweise ist das Mass Y derart, dass die Hauptkraft des Andrückens des Kennzeichens gegen die überstehenden Ränder 4, 5, 7 von den Federelementen 30 ausgehen.

Der zweite Abschnitt 20'' ist durch eine entsprechende Öffnung 16 in der Halterung 10 hindurchgeführt, insbesondere eingepresst. Durch die speziell dimensionierte ausreichende Länge des zweiten Abschnitts 20", d.h. des Körpers 22, steht ein Teil dieses Körpers im montierten Zustand gegenüber der Montageebene 18 der Kennzeichenbefestigung um das Mass X hervor. Bevorzugterweise ist das Mass X zwischen 0.5 mm und 3 mm, besonders bevorzugt zwischen 2 mm und 3 mm.

In einer weiteren bevorzugten Ausführungsform (nicht gezeigt) weist das Dämpfungselement 20 im ersten Abschnitt 20' eine quaderförmige Form oder eine zylindrische Form ohne Schenkel auf. Andere beliebige Aussenkonturen und Formen sind ebenfalls denkbar.

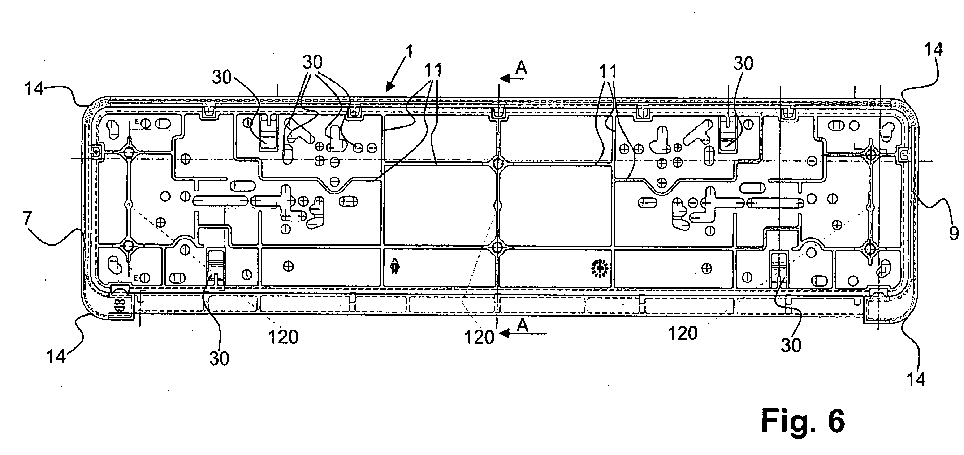

Figur 6 zeigt ein zweites Ausführungsbeispiel, wobei im wesentlichen nur die Dämpfungselemente 120 anders ausgestaltet sind als im ersten Ausführungsbeispiel.

Die Kennzeichenhalterung 1 weist mehrere, hier drei, Dämpfungselemente 120 auf, welche rechtwinklig zum längeren Rand 8 angeordnet sind. Ein erstes Dämpfungselement wird dabei in der Mitte des Kennzeichens angeordnet, zwei weitere Dämpfungselemente 120 werden im Abstand von zwischen 1/20 und 1/3 des längeren Randes zum kürzeren Rand beabstandet angeordnet.

Die Dämpfungselemente 120 können, wie beim ersten Ausführungsbeispiel schon erwähnt, auch anders angeordnet sein, insbesondere können weitere Dämpfungselemente 120 angeordnet werden. Bei sehr kleinen Kennzeichen (beispielsweise Kennzeichen eines Motorrades oder Motorrollers) ist es ausreichend, wenn mindestens ein Dämpfungselement 120 vorgesehen ist.

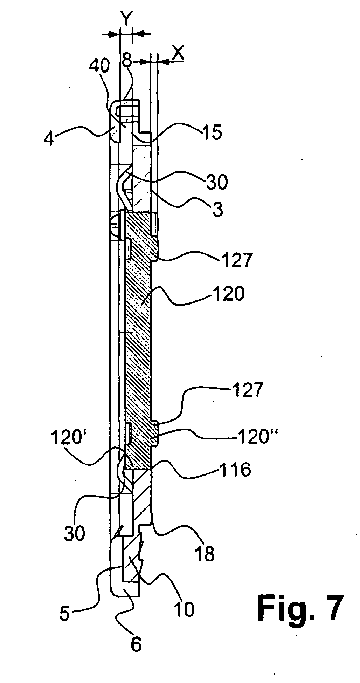

Figur 7 zeigt einen Querschnitt entlang der Linie A-A in Figur 6. In Figur 7 ist erkennbar, dass das Dämpfungselement 120 und auch das Federelement 30 über die Auflageebene 15 des Kennzeichens hervorstehen. Wie auch schon Figur 2, zeigt auch Figur 7 den oberen Randbereich 4. Ebenfalls ist erkennbar, dass ein zweiter Abschnitt 120" des Dämpfungselementes 120 gegenüber der Montageebene 18 hervor ragt.

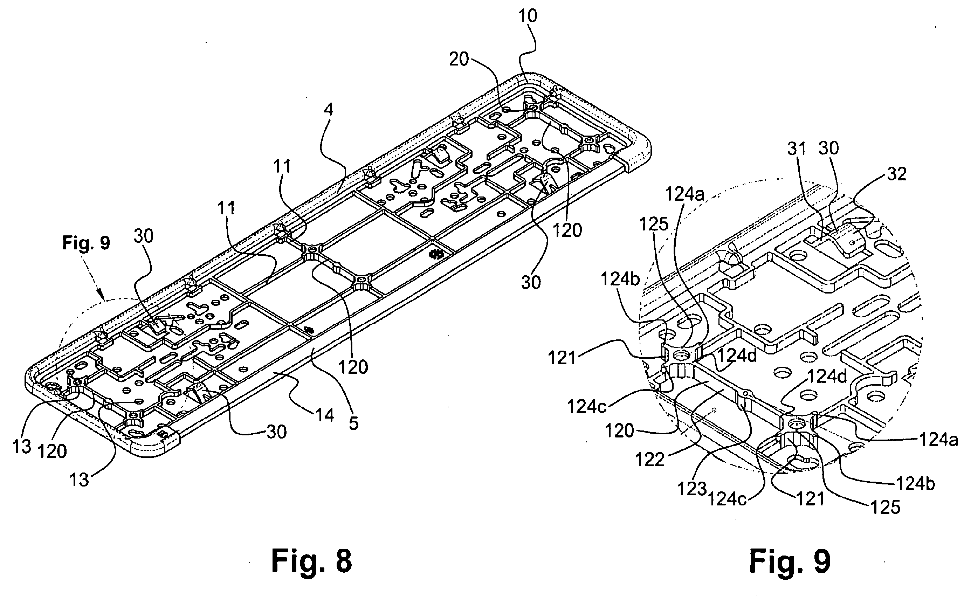

Figur 9 zeigt einen Ausschnitt der perspektivischen Darstellung der Figur 8. Das Federelement 30 weist dabei den gleichen Aufbau wie im ersten Ausführungsbeispiel auf.

Das Dämpfungselement 120 umfasst zwei kreuzförmige Körper 121, einen Verbindungssteg 122 und einen Mittelteil 123. Der kreuzförmige Körper 122 weist im wesentlichen einen zylindrischen Grundkörper 125 auf. Dabei sind vier Schenkel 124 a-d an der Mantelfläche des zylindrischen Grundkörpers 125 angeformt und stehen in einem Winkel von 90° zueinander. Die entstehenden Kanten zwischen dem zylindrischen Grundkörper 125 und den Schenkeln 124 a-d sind abgerundet. Der Verbindungssteg 122 verbindet den Schenkel 124 d eines ersten kreuzförmigen Körpers 122 mit dem Schenkel 124 d eines zweiten kreuzförmigen Körpers 122. In der Mitte des Verbindungssteges 122 ist ein Mittelteil 123 angeordnet. Über dieses Mittelteil 123 wird die Weichkomponente mittels Heisskanaldüse eingespritzt. Vorzugsweise weist der Verbindungssteg 122 eine Länge auf, welche rund 2/3 der kürzeren Kante 7 in der Kennzeichenhalterung 1 entspricht. Vorteilhaft sind Längen zwischen 1/2 und 4/5 der Länge der kürzeren Kante 7. Ein oder mehrere Mittelteile 123 können auch analog zum Dämpfungselement 120 ausgestaltet sein, so dass mehrere Stegabschnitte zwischen mehreren Dämpfungselementen 120/123 verlaufen. Schliesslich können dann Mittelteile 123 auch abgehende Stege 122 aufweisen, die in einem Winkel, beispielsweise von 90 Grad zueinander stehen. Bei in den Zeichnungen nicht dargestellten Ausführungsbeispielen können die Dämpfungselemente 120 mit dem Steg 122 auch parallel zur längeren Kante angeordnet sein und oder einen geschlossenen Rahmen bilden.

Zudem ist auf der einen Stirnseite des zylindrischen Grundkörpers 125 je ein hervorstehendes Element 127 angeordnet. Die hervorstehenden Elemente 126 werden auch als zweiter Abschnitt 120'' des Dämpfungselementes 120 bezeichnet.

Das Dämpfungselement 120 wird ebenfalls mittels dem unten beschriebenem Herstellverfahren mit der Halterung 10 verbunden. Wie dies in Figur 7 erkennbar ist, wird das Dämpfungselement 120 mit einem ersten Abschnitt 120' in eine entsprechenden Öffnung 116 in der Halterung hindurchgeführt, insbesondere eingepresst. Durch die Dimensionierung des ersten Abschnittes 120' stehen der zylindrische Grundkörper 125, die Schenkel 124 a-d, der Verbindungssteg 122 und das Mittelteil 123 gegenüber der Auflageebene 15 des Kennzeichens um das Mass Y hervor. Bevorzugterweise ist das Mass y zwischen 0.5 mm und 3 mm. Besonders bevorzugt zwischen 2 mm und 3 mm. Wie schon im ersten Ausführungsbeispiel erwähnt, ist das Mass Y erheblich kleiner als der Abstand der Kuppe 34 des Federelementes 30 von der Auflagefläche 15.

Das Mittelteil 123 kann ausgestaltet sein, um dieselbe Funktion wie das Dämpfungselement 120 anzunehmen.

Der zweite Abschnitt 120'', insbesondere die hervorstehenden Elemente 127, steht im montierten Zustand gegenüber der Montageebene 18 der Kennzeichenbefestigung um das Mass X hervor. Bevorzugterweise ist das Mass X zwischen 0.5 mm und 3 mm. Besonders bevorzugt zwischen 2 mm und 3 mm.

Bei beiden Ausführungsbeispielen ist gemeinsam, dass im montierten Zustand, das heisst wenn die Kennzeichenhalterung 1 an einem Kraftfahrzeug montiert ist, die Kennzeichenhalterung 1 mit dem zweiten Abschnitt 20", 120" des Dämpfungselementes 20, 120 auf der Kraftfahrzeugwand aufliegt. Das in der Halterung montierte Kennzeichen (nicht gezeigt) liegt auf dem ersten Abschnitt 20', 120' des Dämpfungselementes 20, 120 auf oder steht in einem geringen Abstand von diesem; mindestens liegt es aber auf der Kuppe 34 der Federelemente 30 auf. Durch die Federelemente 30 wird das Kennzeichen gegen den Rand 4, 5, 7 gedrückt. Einwirkende Vibrationen, Stösse, Schläge etc, werden dabei sowohl von den Federelementen 30 aufgenommen, als auch vom Dämpfungselement 20, 120, welches diese Einwirkungen aufgrund der elastischen Eigenschaften dämpfen kann. Dabei wird sowohl das in der Kennzeichenhalterung montierte Kennzeichen, als auch die am Kraftfahrzeug montierte Kennzeichenhalterung 1 gedämpft. Durch diese Dämpfung werden störende Klappergeräusche vermieden. Das heisst, dass zwischen Kennzeichenhalterung und Fahrzeugwand wirkende Kräfte, die über die genannten Befestigungsschrauben übertragen werden, zwar zu Verwindungen der Kennzeichenhalterung führen können, diese aber durch die Auflagepunkte 20'', 120'' der Dämpfungselemente 20, 120 auf der Fahrzeugwand nicht zu Klappergeräuschen führen können. Die Auflagepunkte 20'', 120" sind hier kreisrund ausgebildet. Es können je nach Ausgestaltung der Öffnung 16 auch andere Formen vorgesehen sein, auch kann das Element 22 jenseits der Grundplatte 1 ebenfalls aufpilzen und somit eine breitere Dämpfungsfläche bilden, als in den Figuren gezeigt. Eine solche breitere Dämpfungsfläche kann auch kreisrund sein oder eine andere Form wie einen Polygonzug etc. aufweisen.

Falls die Dämpfungselemente 20 aus einem unten genannten zweiten Kunststoff hergestellt sind, aber als getrennte und somit eingesetzte Teile mit einem Schaft 22, so können die oben genannten Kräfte zu einem gewissen Eindrücken der in die Öffnungen in einem Presssitz eingesetzten Dämpfungselemente 20 in die Halterung 10 führen. Dann werden diese Dämpfungselemente 20 gegen die Rückseite des Kraftfahrzeugkennzeichens stossen, so dass die Dämpfungsfunktion nicht beeinträchtigt wird. Wenn der Schaft 22 auf beiden Seiten in ein breiteres einen Kragen aufweisendes Element übergeht, dann bildet sich ein hantelförmiges Dämpfungselement 20. Dies wird als Teil schwieriger einzusetzen sein. Es kann aber nach den untenstehenden Ausführungen insbesondere in einer Mehrkomponenten-Spritzgusstechnik hergestellt werden.

Die Halterung 10 mit den Federelementen 30 wird aber vorzugsweise aus einem ersten Kunststoff gespritzt. Das Dämpfungselement 20,120 wird aus einem zweiten Kunststoff gespritzt. Dabei werden die beiden Teile in einer Mehrkomponenten-Spritzgusstechnik hergestellt. In einem ersten Schritt wird Polypropylen mittels Heisskanaltechnik in ein Werkzeug gespritzt. In einem zweiten Schritt werden Sperrschieber, welche bisher die Hohlräume für die zweite Komponente verschlossen hielten, im Werkzeug betätigt. Dabei werden die Räume freigegeben und über ein zweites Einspritzaggregat kann der zweite Kunststoff eingespritzt werden. Die beiden Komponenten werden dadurch sowohl mechanisch als auch durch Adhäsion und Kohäsion miteinander verbunden, wenn es sich um eine verträgliche Werkstoffpaarung handelt. Diese Verbindungsart verhindert ein Lösen und ein anschliessendes Herausfallen der Dämpfungselemente 20, 120 aus der Halterung 10. Typischerweise weist der erste Kunststoff eine grössere Härte und eine kleinere Elastizität als der zweite Kunststoff auf. Bevorzugterweise wird der erste Kunststoff aus der Gruppe der Thermoplaste ausgewählt. Besonders bevorzugt wird Polypropylen (PP) verwendet. Der zweite Kunststoff wird vorzugsweise aus der Gruppe der Thermoplast-Elastomere (TPE) gewählt und kann auch als Weichkomponente bezeichnet werden. Dies gilt auch bei einer Mehrteiligkeit der Halterung. Bevorzugterweise weist der erste Kunststoff eine Härte von etwa 80 Rockwell R und der zweite Kunststoff eine Härte von 40 - 60 Shore A auf.

### Bezugszeichenliste

- 1: Kennzeichenbefestigung
- 2: Vorderseite/vordere Seite
- 3: Rückseite/hintere Seite
- 4: oberer Randbereich
- 5: unterer Randbereich
- 6: Erste Seite
- 7: Zweite Seite
- 8: Dritte Seite
- 9: Vierte Seite
- 10: Halterung
- 11: Verstärkungsrippen
- 12: Rand
- 13: Bohrungen für Befestigung
- 14: Aufnahme für Schieber
- 15: Kennzeichenauflageebene
- 16: Öffnung
- 17: Dämpfungselementauflageebene
- 18: Montageebene
- 20: Dämpfungselement
- 21: Hauptkörper
- 22: Körper
- 23: Schenkel
- 25: Grundfläche
- 26: Mantelfläche
- 27: Öffnungen
- 30: Federelement
- 31: erster Schenkel
- 32: Zweiter Schenkel
- 33: Winkel zwischen erstem und zweitem Schenkel
- 34: Kuppe
- 35: Winkel
- 40: Aufnahme für Kennzeichen / Randnuten

- 120: Dämpfungselement
- 121: kreuzförmiger Körper
- 122: Verbindungssteg
- 123: Mittelteil
- 124: Schenkel
- 125: abgerundete Ecken
- 126: hervorstehendes Element

## Patentansprüche

1. Halterung für ein Kraftfahrzeugkennzeichen mit einer an einem Kraftfahrzeug befestigbaren Grundplatte (1), wobei die Grundplatte (1) über einen mindestens teilweisen Begrenzungsrand (7, 8, 9) verfügt, der eine Kennzeichenaufnahme (40) bildet, wobei die Grundplatte (1) mit mindestens einem Dämpfungselement (20,120) versehen ist, welches auf der der besagten Kennzeichenaufnahme (40) gegenüberliegenden Seite über die Oberfläche der Grundplatte (1) hinausragt und damit die Halterung (10) gegenüber unerwünschten von dem besagten Kraftfahrzeug übertragenen Vibrationen dämpft, **dadurch gekennzeichnet, dass** der auf der der besagten Kennzeichenaufnahme (40) gegenüberliegenden Seite über die Oberfläche der Grundplatte (1) hinausragende Abschnitt des Dämpfungselementes (20, 120) einen zweiten Abschnitt (20", 120") bildet, während ein erster Abschnitt (20', 120') des Dämpfungselementes (20, 120) in einer Aufnahme (16,116) in die Grundplatte (1) eingelassen ist, so dass ein einsetzbares Kennzeichen auf dem Dämpfungselement (20, 120) aufliegen kann.

2. Halterung nach Anspruch 1, **dadurch gekennzeichnet, dass** die Halterung (10) aus einem ersten Kunststoff besteht und dass die Dämpfungselemente (20, 120) aus einem zweiten Kunststoff bestehen, wobei die Dämpfungselemente (20, 120) durch Adhäsion und/oder Kohäsion mit der Halterung (10) verbunden sind, so dass eine einstückige Struktur entsteht.

3. Halterung nach Anspruch 1 oder 2, **dadurch gekennzeichnet, dass** der auf der der besagten Kennzeichenaufnahme (40) gegenüberliegenden Seite über die Oberfläche der Grundplatte (1) hinausragende Abschnitt des Dämpfungselementes (20) einen zweiten Abschnitt (20'') bildet, während ein erster Abschnitt (20') des Dämpfungselementes (20) zwischen einem einsetzbaren Kennzeichen und der Grundplatte (1) liegt.

4. Halterung nach einem der Ansprüche 1 bis 3, **dadurch gekennzeichnet, dass** zusätzlich mindestens ein Federelement (30) vorgesehen ist, welche das Kennzeichen in der Halterung (10) selbst gegen von dem besagten Kraftfahrzeug übertragenen Vibrationen dämpft.

5. Halterung nach Anspruch 4, **dadurch gekennzeichnet, dass** das Federelement (30) aus dem gleichen Kunststoff wie die Grundplatte (1) besteht, und vorteilhafterweise an der Grundplatte (1) angeformt wird, wobei das Federelement (30) derart ausgestaltet ist, dass es über die Auflageebene (15) hervor steht, um eine Federkraft gegen die Rückseite eines einsetzbaren Kennzeichens zu bewirken und das Kennzeichen gegen die Begrenzungsränder (7, 8, 9) zu drücken.

6. Halterung nach einem der Ansprüche 4 oder 5, **dadurch gekennzeichnet, dass** mehr als ein Federelement (30) vorgesehen ist, die jeweils paarweise im Bereich zwischen 1/6 und 1/3 von den seitlichen kürzeren Rändern (7,9) beabstandet sind, wobei bei einer ungeraden Anzahl von Federelementen (30) eine ungerade Anzahl von diesen Federelementen (30) auf der Mittelebene zwischen den seitlichen kürzeren Rändern (7,9) angeordnet sind.

7. Halterung nach einem der Ansprüche 4 oder 5, **dadurch gekennzeichnet, dass** mehr als ein Dämpfungselement (20) vorgesehen ist, die jeweils paarweise im Bereich zwischen 1/6 und 1/3 von den seitlichen kürzeren Rändern (7,9) beabstandet sind, wobei bei einer ungeraden Anzahl von Dämpfungselementen (20) eine ungerade Anzahl von diesen Dämpfungselementen (20) auf der Mittelebene zwischen den seitlichen kürzeren Rändern (7,9) angeordnet sind.

8. Halterung nach einem der Ansprüche 1 bis 7, **dadurch gekennzeichnet, dass** die Grundplatte für jedes Dämpfungselement (20) über eine durchgehende Öffnung (16) verfügt, und dass jedes Dämpfungselement (20) über einen durch diese Öffnung (16) hindurchgehenden Schaft (22) verfügt, wobei dieser Schaft vorteilhafterweise, auf der der besagten Kennzeichenaufnahme (40) zugeneigten Seite über die Oberfläche der Grundplatte (1) hinausragt.

9. Halterung nach Anspruch 8, **dadurch gekennzeichnet, dass** der über den Schaft (22) auf der der besagten Kennzeichenaufnahme (40) zugeneigten und/oder abgewandten Seite hinausragende Abschnitt (X, Y) einen gegenüber der Querschnittsfläche des Schaftes (22) grössere Querschnittsfläche aufweist.

10. Halterung nach einem der Ansprüche 4 oder 5, **dadurch gekennzeichnet, dass** mehr als ein Dämpfungselement (120) vorgesehen ist, wobei jeweils zwei Dämpfungselemente rechtwinklig zum längeren Rand (8) im Bereich zwischen 1/20 und 1/3 des längeren Randes (8) von den seitlichen kürzeren Rändern (7,9) beabstandet sind und jeweils ein Dämpfungselement rechtwinklig und mittig zum längeren Rand (8) angeordnet ist.

11. Halterung nach einem der Ansprüche 1 bis 7, **dadurch gekennzeichnet, dass** die Grundplatte für jedes Dämpfungselement (120) über eine durchgehende Öffnung (116) verfügt, und dass jedes Dämpfungselement (120) über einen durch diese Öffnung (116) hindurchgehende Gestalt verfügt, wobei ein Teil dieser Gestalt vorteilhafterweise auf der der besagten Kennzeichenaufnahme (40) zugeneigten Seite über die Oberfläche der Grundplatte (1) hinausragt.

12. Verfahren zum Herstellen einer Halterung gemäss einem der vorhergehenden Ansprüche, **dadurch gekennzeichnet, dass** zuerst ein erster Kunststoff in eine Spritzgussform gespritzt wird, wobei damit die Halterung (10) und alle ihr angeformten Teile hergestellt werden, vorteilhafterweise das oder die Federelemente (30), gegebenenfalls als Einlegeteile, und dass anschliessend ein das oder die zweiten Dämpfungselemente (20, 120) ausformender Kunststoff in die Spritzgussform gespritzt wird.

13. Verfahren nach Anspruch 12, **dadurch gekennzeichnet, dass** der erste Kunststoff härter als der zweite Kunststoff ist.

## Claims

1. Support for a vehicle registration plate comprising a base plate (1), which can be fixed on a motor vehicle, the baseplate (1) having an at least partial bordering edge (7, 8, 9), which forms a registration plate holder (40), wherein the baseplate (1) is provided with at least one damping element (20, 120), which protrudes beyond the surface of the baseplate (1) on the side opposite from said registration plate holder (40), and consequently damps the support (10) from undesired vibrations transmitted from said motor vehicle, **characterized in that** the portion of the damping element (20, 120) protruding beyond the surface of the baseplate (1) on the side opposite from said registration plate holder (40) forms a second portion (20'', 120''), while a first portion (20', 120') of the damping element (20, 120) is recessed in a holder (16, 116) in the baseplate (1), so that an insertable registration plate can rest on the damping element (20, 120).

2. Support according to Claim 1, **characterized in that** the support (10) consists of a first plastic and **in that** the damping elements (20, 120) consist of a second plastic, wherein the damping elements (20, 120) are bonded to the holder (10) by adhesion and/or cohesion, so that a one-piece structure is created.

3. Support according to Claim 1 or 2, **characterized in that** the portion of the damping element (20) protruding beyond the surface of the baseplate (1) on the side opposite from said registration plate holder (40) forms a second portion (20''), while a first portion (20') of the damping element (20) lies between an insertable registration plate and the baseplate (1).

4. Support according to one of Claims 1 to 3, **characterized in that** at least one spring element (30) is additionally provided, damping the registration plate in the support (10) itself from vibrations transmitted from said motor vehicle.

5. Support according to Claim 4, **characterized in that** the spring element (30) consists of the same plastic as the baseplate (1), and is advantageously moulded on the baseplate (1), wherein the spring element (30) is configured in such a way that it protrudes beyond the resting plane (15), in order to bring about a spring force against the rear side of an insertable registration plate and press the registration plate against the bordering edges (7, 8, 9).

6. Support according to either of Claims 4 and 5, **characterized in that** more than one spring element (30) is provided, respectively in pairs at a distance in the range between 1/6 and 1/3 from the lateral shorter edges (7, 9), wherein, with an uneven number of spring elements (30), an uneven number of these spring elements (30) are arranged on the centre plane between the lateral shorter edges (7, 9).

7. Support according to either of Claims 4 and 5, **characterized in that** more than one damping element (20) is provided, respectively in pairs at a distance in the range between 1/6 and 1/3 from the lateral shorter edges (7, 9), wherein, with an uneven number of damping elements (20), an uneven number of these damping elements (20) are arranged on the centre plane between the literal shorter edges (7, 9).

8. Support according to one of Claims 1 to 7, **characterized in that** the baseplate has a through-opening (16) for each damping element (20), and **in that** each damping element (20) has a shaft (22) passing through this opening (16), wherein this shaft advantageously protrudes beyond the surface of the baseplate (1) on the side made to face towards said registration plate holder (40).

9. Support according to Claim 8, **characterized in that** the protruding portion (X, Y) made to face towards and/or away from said registration plate holder (40) has a cross-sectional area that is greater than the cross-sectional area of the shaft (22).

10. Support according to either of Claims 4 and 5, **characterized in that** more than one damping element (120) is provided, wherein two damping elements are respectively at a distance at right angles in relation to the longer edge (8) in the range between 1/20 and 1/3 of the longer edge (8) from the lateral shorter edges (7, 9) and one damping element is respectively arranged at right angles and centrally in relation to the longer edge (8).

11. Support according to one of Claims 1 to 7, **characterized in that** the baseplate has a through-opening (116) for each damping element (120), and **in that** each damping element (120) has a formation passing through this opening (116), wherein part of this formation advantageously protrudes beyond the surface of the baseplate (1) on the side made to face towards said registration plate holder (40).

12. Method for producing a support according to one of the preceding claims, **characterized in that** first a first plastic is injected into an injection mould, wherein the support (10) and all the parts moulded on it, advantageously the spring element or elements (30), are thereby produced, if appropriate as inserts, and **in that** subsequently a plastic forming the second damping element or elements (20, 120) is injected into the injection mould.

13. Method according to Claim 12, **characterized in that** the first plastic is harder than the second plastic.

## Revendications

1. Support pour une plaque d'immatriculation de véhicule automobile, comprenant une plaque de base (1) pouvant être fixée sur un véhicule automobile, la plaque de base (1) disposant d'un bord de limitation (7, 8, 9) au moins partielle, qui forme un logement de plaque d'immatriculation (40), la plaque de base (1) étant pourvue d'au moins un élément d'amortissement (20, 120), qui dépasse de la surface de la plaque de base (1) du côté opposé audit logement de plaque d'immatriculation (40) et amortit ainsi le support (10) par rapport aux vibrations indésirables transmises par ledit véhicule automobile, **caractérisé en ce que** la portion de l'élément d'amortissement (20, 120) dépassant de la surface de la plaque de base (1) du côté opposé audit logement de plaque d'immatriculation (40) forme une deuxième portion (20", 120"), tandis qu'une première portion (20', 120') de l'élément d'amortissement (20, 120) est encastrée dans un logement (16, 116) dans la plaque de base (1), de sorte qu'une plaque d'immatriculation puisse reposer sur l'élément d'amortissement (20, 120).

2. Support selon la revendication 1, **caractérisé en ce que** le support (10) se compose d'un premier plastique et **en ce que** les éléments d'amortissement (20, 120) se composent d'un deuxième plastique, les éléments d'amortissement (20, 120) étant connectés par adhésion et/ou cohésion au support (10) de sorte que l'on obtienne une structure d'une seule pièce.

3. Support selon la revendication 1 ou 2, **caractérisé en ce que** la portion de l'élément d'amortissement (20) dépassant de la surface de la plaque de base (1) du côté opposé audit logement de plaque d'immatriculation (40) forme une deuxième portion (20") tandis qu'une première portion (20') de l'élément d'amortissement (20) se situe entre une plaque d'immatriculation insérable et la plaque de base (1).

4. Support selon l'une quelconque des revendications 1 à 3, **caractérisé en ce qu'**en outre au moins un élément de ressort (30) est prévu, lequel amortit la plaque d'immatriculation dans le support (10) même, contre les vibrations transmises par ledit véhicule automobile.

5. Support selon la revendication 4, **caractérisé en ce que** l'élément de ressort (30) se compose du même plastique que la plaque de base (1), et avantageusement est moulé sur la plaque de base (1), l'élément de ressort (30) étant configuré de telle sorte qu'il dépasse au-delà du plan d'appui (15), afin d'exercer une force de ressort contre le côté arrière d'une plaque d'immatriculation insérable et, de manière à presser la plaque d'immatriculation contre les bords de limitation (7, 8, 9) .

6. Support selon l'une quelconque des revendications 4 ou 5, **caractérisé en ce que** l'on prévoit plus d'un élément de ressort (30), lesquels sont espacés à chaque fois par paire dans la région entre 1/6 et 1/3 des bords latéraux plus courts (7, 9), un nombre impair de ces éléments de ressort (30) étant disposé sur le plan médian entre les bords latéraux plus courts (7, 9) dans le cas d'un nombre impair d'éléments de ressort (30).

7. Support selon l'une quelconque des revendications 4 ou 5, **caractérisé en ce que** l'on prévoit plus d'un élément d'amortissement (20), lesquels sont espacés à chaque fois par paire dans la région entre 1/6 et 1/3 des bords latéraux plus courts (7, 9), un nombre impair de ces éléments d'amortissement (20) étant disposé sur le plan médian entre les bords latéraux plus courts (7, 9) dans le cas d'un nombre impair d'éléments d'amortissement (20).

8. Support selon l'une quelconque des revendications 1 à 7, **caractérisé en ce que** la plaque de base pour chaque élément d'amortissement (20) dispose d'une ouverture traversante (16), et **en ce que** chaque élément d'amortissement (20) dispose d'une tige (22) passant à travers cette ouverture (16), cette tige dépassant avantageusement de la surface de la plaque de base (1) du côté tourné vers ledit logement de plaque d'immatriculation (40).

9. Support selon la revendication 8, **caractérisé en ce que** la portion (X, Y) dépassant de la tige (22) du côté tourné vers et/ou opposé audit logement de plaque d'immatriculation (40) présente une surface en section transversale plus grande que la surface en section transversale de la tige (22).

10. Support selon l'une quelconque des revendications 4 ou 5, **caractérisé en ce que** l'on prévoit plus d'un élément d'amortissement (120), à chaque fois deux éléments d'amortissement étant espacés des bords latéraux plus courts (7, 9) à angle droit par rapport au bord plus long (8) dans la région comprise entre 1/20 et 1/3 du bord plus long (8) et à chaque fois un élément d'amortissement est disposé à angle droit et centralement par rapport au bord plus long (8).

11. Support selon l'une quelconque des revendications 1 à 7, **caractérisé en ce que** la plaque de base pour chaque élément d'amortissement (120) dispose d'une ouverture traversante (116), et **en ce que** chaque élément d'amortissement (120) dispose d'une forme passant à travers cette ouverture (116), une partie de cette forme dépassant avantageusement au-delà de la surface de la plaque de base (1) du côté tourné vers ledit logement de ladite plaque d'immatriculation (40).

12. Procédé de fabrication d'un support selon l'une quelconque des revendications précédentes, **caractérisé en ce que** tout d'abord, un premier plastique est injecté dans un moule d'injection, le support (10) et toutes ses pièces moulées étant ainsi fabriqués, avantageusement le ou les éléments de ressort (30), éventuellement sous forme de pièces d'insertion, et **en ce qu'**ensuite un plastique formant le ou les deuxièmes éléments d'amortissement (20, 120) est injecté dans le moule d'injection.

13. Procédé selon la revendication 12, **caractérisé en ce que** le premier plastique est plus dur que le deuxième plastique.
